(19) Europäisches Patentamt
European Patent Office
Office européen des brevets

(11) **EP 4 776 247 A1**

(12) **EUROPEAN PATENT APPLICATION**
published in accordance with Art. 153(4) EPC

(43) Date of publication:
**15.07.2026 Bulletin 2026/29**

(21) Application number: **24861613.8**

(22) Date of filing: **24.06.2024**

(51) International Patent Classification (IPC):
***G06V 20/58*** (2022.01)

(52) Cooperative Patent Classification (CPC):
Y02T 10/40

(86) International application number:
**PCT/CN2024/100900**

(87) International publication number:
**WO 2025/050767 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.09.2023 CN 202311140496**

(71) Applicant: **Dongfeng Motor Group Co., Ltd
Wuhan, Hubei 430056 (CN)**

(72) Inventors:
• **ZHU, Yakun
Wuhan, Hubei 430056 (CN)**

• **YU, Hao
Wuhan, Hubei 430056 (CN)**
• **YU, Jie
Wuhan, Hubei 430056 (CN)**
• **HU, Tianren
Wuhan, Hubei 430056 (CN)**
• **CHENG, Liangzhu
Wuhan, Hubei 430056 (CN)**

(74) Representative: **Valet Patent Services Limited
c/o Caya 83713X
Am Börstig 5
96052 Bamberg (DE)**

(54) **VISION-BASED SPATIAL PARKING SPACE DETECTION METHOD AND SYSTEM, AND AUTOMOBILE**

(57) The invention provides a vision-based spatial parking space detection method, comprising: after performing a brightness preprocessing on a surround-view image, inputting a surround-view image brightness-preprocessed into a trained visual parking space instance segmentation model to obtain first-stage parkable space instance regions; performing a dilation followed by an erosion operation is respectively on each first-stage parkable space instance region, and then performing an area screening to remove instance regions whose pixel area is smaller than a theoretical minimum pixel area of parking space, and take remaining first-stage parkable space instance regions as second-stage parkable space instance regions; then selecting an instance region closest to a preset position is selected as a third-stage parkable space instance region; and constructing a maximum instance boundary for a spatial parking space, and on this basis, constructing a parkable spatial parking space.

FIG. 1

**Description**

CROSS-REFERENCE TO RELATED APPLICATION

Embodiments of the present application are based on and claim priority to a Chinese patent application No. 202311140496.8, filed on September 04, 2023, the entire content of which is incorporated herein by reference.

TECHNICAL FIELD

The invention belongs to the technical field related to automatic parking assist, and specifically relates to a vision-based spatial parking space detection method, system, and vehicle.

BACKGROUND

Technologies related to automatic parking assist have been continuously developing and progressing, from the initial ultrasonic radar-based spatial parking space Automatic Parking Assist (APA), to the later mainstream visual spatial parking space fusion automatic parking assist (FAPA), to the currently leading commercially available in-yard Learned Automatic Parking Assist (LAPA), and future fully automated Valet Parking (AVP).

However, regarding a detection of spatial parking space in these solutions such as FAPA/LAPA/AVP, the ultrasonic radar-based parking space detection used initially in the APA solution is dominant. Detecting a parking space using an ultrasonic radar involves constructing a parkable spatial parking space through logic methods such as obtaining obstacle boundary points through sudden changes in ultrasonic radar distance and through obstacle distance information detected by the ultrasonic radar during vehicle movement. Due to limitations in detection accuracy of ultrasonic radars, ultrasonic radars have poor accuracy in parking space detection and are unable to detect diagonal spatial parking spaces. For example, an error magnitude of boundary point of a spatial parking space detected by an ultrasonic radar is generally at a decimeter level. An ultrasonic radar can only detect parking spaces that are perpendicular or parallel to the vehicle's own body, and cannot detect angled parking spaces. Furthermore, due to limitations in an installation height of ultrasonic sensors, an ultrasonic radar cannot judge low obstacles on a ground or a flatness of the ground, leading to false reports of spatial parking spaces. For example, a spatial parking space may be falsely constructed above a low flowerbed or lawn, or a spatial parking space may be constructed in a place with low obstacles, resulting in illegal parking or even scratched chassis.

SUMMARY

A technical problem to be solved by the invention is: to provide a vision-based spatial parking space detection method, system, and vehicle, to improve an accuracy of detection of spatial parking space.

A technical solution adopted by the invention to solve the above technical problem is: a vision-based spatial parking space detection method, applied to an electronic device of a vehicle,

receiving a surround-view image of present vehicle, and performing a brightness preprocessing on the surround-view image;

inputting a brightness-preprocessed surround-view image into a trained visual parking space instance segmentation model, to obtain first-stage parkable space instance regions in the surround-view image;

for each the first-stage parkable space instance regions, respectively performing a dilation followed by an erosion operation, and then performing an area screening to remove instance regions whose pixel area is smaller than a theoretical minimum pixel area of parking space, and to take remaining first-stage parkable space instance regions as second-stage parkable space instance regions;

selecting an instance region closest to a preset position from the second-stage parkable space instance regions, as a third-stage parkable space instance;

for the third-stage parkable space instance region, constructing a maximum instance boundary for a spatial parking space;

constructing a parkable spatial parking space based on the maximum instance boundary according to a required parking space size.

As a second aspect, the invention provides a vision-based spatial parking space detection system, comprising a memory, a processor, and a program stored on the memory and executable on the processor, the processor, when executing the program, implementing the above method.

As a third aspect, the invention further provides a vehicle, comprising surround-view cameras, and the vision-based spatial parking space detection system described above.

As a fourth aspect, the invention further provides a computer-readable storage medium, having a computer program stored thereon, the computer program, when executed by a processor, implementing steps of the method.

Beneficial effects of the invention are as follows. The invention is vision-based, using stitched surround-view images collected by a vehicle's own surround-view cameras as a basis. Parkable space instances are preliminarily screened based on an instance segmentation algorithm, then small holes in the parkable space instance regions are eliminateed through a dilation followed by an erosion operation, then a secondary screening are performed by using area comparison, and finally a maximum instance boundary for a spatial parking space is constructed based on image processing to construct a parkable spatial parking space, thereby improving an accuracy of parkable detection of spatial parking space. Meanwhile, the system directly uses the vehicle's own surround-view images, requiring no other hardware cost.

BRIEF DESCRIPTION OF DRAWINGS

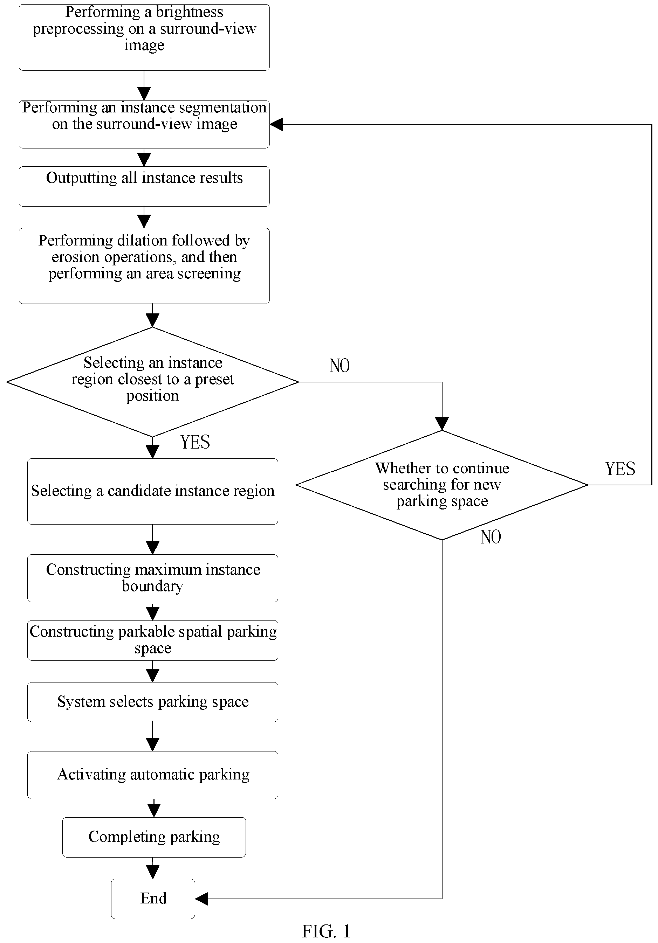

FIG. 1 is a flowchart of a method according to an embodiment of the invention.

DETAILED DESCRIPTION

The invention is further described below in conjunction with specific examples and drawings.

The invention provides a vision-based spatial parking space detection method. As shown in FIG. 1, the method is used in a vehicle equipped with surround-view cameras, and is triggered upon receiving a signal to activate a parking space search function. If no parkable spatial parking space meeting requirements is detected, a search continues until a parkable spatial parking space is obtained or a signal to deactivate the parking space search function is received. The signals for activating and deactivating the parking space search function may be set according to actual situations, for example, the signals may be sent by touching buttons or physical buttons on a human-machine interactive interface of the vehicle or on a steering wheel, or it may also be linkage schemes for sending signals such as being linked with a reverse gear for sending signals. The method specifically includes the following steps:

S1, a surround-view image of a present vehicle is received, and a brightness preprocessing is performed on the surround-view image. The surround-view image refers to a stitched complete surround-view image, and is usually formed by stitching images captured by four surround-view cameras (fisheye cameras) at the front, rear, left, and right of the vehicle. The stitching the images is implemented by a surround-view system, and the method merely obtains the surround-view image from the system. A purpose of the brightness preprocessing is to correct a brightness of a picture and then reduce noise to reduce an impact on subsequent parking space instance segmentation performed on the surround-view image.

In this embodiment, the brightness preprocessing specifically includes: calculating an average brightness of the surround-view image; classifying the surround-view image into an over-bright picture, a high-brightness picture, a normal-brightness picture, a dark picture, or an over-dark picture according to the average brightness and a preset threshold; performing a brightness correction on surround-view images other than those classified into the normal-brightness picture, so that an average brightness of the surround-view image is within a range of the normal-brightness picture; and then performing a median filtering processing on the surround-view image.

S2, a brightness-preprocessed surround-view image is inputted into a trained visual parking space instance segmentation model, to obtain first-stage parkable space instance regions in the surround-view image. Optionally, a first-stage parkable space instance region is several pixel blocks annotated in the surround-view image, and pixels in each pixel block are annotated. Pixels in a same pixel block correspond to a same parkable space instance region, and pixels in different pixel blocks correspond to different parkable space instance regions.

The visual parking space instance segmentation model is obtained by performing a model training using a surround-view parking space instance segmentation dataset by utilizing an instance segmentation algorithm.

Specifically, a surround-view parking space instance segmentation dataset is first established by: collecting a large number of parking surround-view pictures; and screening the parking surround-view pictures, to retain only parking surround-view pictures in which there is at least one reasonable parkable space as pictures of an effective dataset to perform a parking space instance annotation thereon. A basic annotation criterion is to annotate only reasonable parkable space instance regions, and at least one side of a parkable space instance region has an obstacle. The parking surround-view picture refers to surround-view images (all of which are already stitched) during a parking process.

After the dataset is prepared, the model training is performed using an instance segmentation model such as Mask R-CNN and the like to obtain the visual parking space instance segmentation model.

S3, for each first-stage parkable space instance region, dilation followed by erosion operations are respectively performed, and then an area screening is performed to remove instance regions whose pixel area is smaller than a theoretical minimum pixel area of parking space, and take remaining first-stage parkable space instance regions as second-stage parkable space instance regions.

This is done because, due to limitations of image noise and accuracy of instance segmentation, among the first-stage parkable space instance regions output by the visual parking space instance segmentation model, there may still be cases where individual pixel points in a segmented parkable space instance region fail to be successfully segmented, forming small holes within the segmented parkable space instance region. Therefore, a dilation followed by an erosion operation needs to be performed on the first-stage parkable space instance regions. In this way, small holes in the parkable space instance regions detected by the model can be eliminated, without significantly changing an area and a boundary of the first-stage parkable space instance regions. The dilation and erosion are operational means in image processing.

Subsequently, an area screening is performed on the parkable space instance regions that have undergone dilation followed by erosion. If a pixel area (or a number of pixels) of an instance region is smaller than the theoretical minimum pixel area of parking space, these instance regions that do not meet requirements are cleared. The remaining first-stage parkable space instance regions are listed as second-stage parkable space instance regions as candidate regions. The theoretical minimum pixel area of parking space may be preset according to conditions of the present vehicle.

S4, an instance region closest to a preset position is selected from the second-stage parkable space instance regions, as a third-stage parkable space instance region.

Since most obstacles in a parking lot environment are three-dimensional obstacles, in non-central regions of the surround-view image, the obstacles may partially occlude a parkable space, affecting calculation of boundaries of the parkable space. To reduce an impact of three-dimensional obstacles within a range of the surround-view image on instance segmentation of the parkable space region, in this embodiment an instance region closest to left and right surround-view cameras of the present vehicle and close to a middle portion of the surround-view image is screened out, as the third-stage parkable space instance region. It is specifically obtained by:

taking a center of a rear axle of the vehicle as a coordinate origin, a heading direction of the vehicle as a y direction, and a direction perpendicular to a right side of a body of the vehicle as an x direction, and calculating a center coordinate point of each second-stage parkable space instance region;

dividing the second-stage parkable space instance regions into left and right sides of the body of the vehicle according to the center coordinate point, respectively calculating an instance screening weighted distance $L_l$ and $L_r$ from second-stage parkable space instance regions on the left side and right side to surround-view cameras on the left side and right side:

$$L_l = \frac{1}{n}\sum_{i=1}^{n}[(x_i - x_l)^2 + a(y_i - y_l)^2]$$

$$L_r = \frac{1}{n}\sum_{i=1}^{n}[(x_i - x_r)^2 + a(y_i - y_r)^2]$$

where, $x_l, y_l$ are x, y direction coordinates of a surround-view camera on the left side of the body of the vehicle; $x_r, y_r$ are x, y direction coordinates of a surround-view camera on the right side of the body of the vehicle; $x_i, y_i$ are x, y direction coordinates of each one pixel point of one second-stage parkable space instance region; n is a total number of pixel points of the one second-stage parkable space instance region; $a$ is a preset value;

respectively calculating minimum values of $L_l$ and $L_r$ space instance region.

In this embodiment, the instance region closest to the left and right surround-view cameras of the present vehicle and close to the middle portion of the surround-view image is screened out, rather than the instance region closest to the front and rear surround-view cameras, because the surround-view cameras are fisheye cameras, and there may be misalignment and distortion in oblique front and oblique rear directions during capturing and image stitching. It is better to select the instance region closest to the left and right surround-view cameras of the present vehicle. Furthermore, the closer to the middle portion of the surround-view image, the smaller the possibility of distortion.

S5, for the third-stage parkable space instance region, a maximum instance boundary for a spatial parking space is constructed. Since target spatial parking spaces to be constructed include vertical spatial parking spaces, horizontal spatial parking spaces, and diagonal spatial parking spaces, this embodiment proposes a bidirectional-preference maximum inscribed trapezoidal parking space instance boundary construction method. This construction method first focuses on a longitudinal depth of an instance space to construct an instance boundary, to find a maximum instance boundary that can construct a vertical spatial parking space and a diagonal spatial parking space; then focuses on a lateral width of the instance space to construct an instance boundary, to find a maximum instance boundary that can construct a horizontal spatial parking space.

With the bidirectional-preference maximum inscribed trapezoidal parking space instance boundary construction method, it is first focused on a longitudinal depth of an instance space to construct an instance boundary, to find a maximum instance boundary that can construct a vertical spatial parking space and a diagonal spatial parking space, and then focused on a lateral width of the instance space to construct an instance boundary, to find a maximum instance boundary that can construct a horizontal spatial parking space, thereby increasing an ability to detect angled parking spaces. A calculation amount of this construction method is small.

A length of a bottom side of a trapezium closer to the vehicle is $L_1$, a length of a corresponding side at another end of the trapezium is $L_2$, these two sides being parallel to each other; a height of the trapezium is $H_{(L_1, L_2)}$, a construction formula for the boundary of the longitudinal-priority-instance trapezium can be obtained as:

$$W_H = \frac{1}{2}(L_1 + L_2)H_{(L_1, L_2)} + \alpha H_{(L_1, L_2)}^2$$

Where, $W_H$ is a corrected area of the boundary of the longitudinal-priority-instance trapezium; $\alpha$ is a longitudinal correction parameter;

A construction formula for the boundary of the lateral-priority-instance trapezium is:

$$W_L = \frac{1}{2}(L_1 + L_2)H_{(L_1, L_2)} + \beta(L_1 + L_2)^2$$

Where, $W_L$ is a corrected area of the boundary of the lateral-priority-instance trapezium ; $\beta$ is a lateral correction parameter;

maximum values of $W_H$ and $W_L$ are respectively found, to obtain the boundary of the longitudinal-priority-instance trapezium and the boundary of the lateral-priority-instance trapezium.

S6, a parkable spatial parking space is constructed based on the maximum instance boundary according to a required parking space size.

Based on the boundary of the longitudinal-priority-instance trapezium and the boundary of the lateral-priority-instance trapezium, a method for constructing the parkable spatial parking space is as follows.

First, a standard vertical spatial parking space may be constructed in the boundary of the longitudinal-priority-instance trapezium; if the boundary of the longitudinal-priority-instance trapezium satisfies a construction of a standard vertical spatial parking space therein, the standard vertical spatial parking space is constructed. A size of the standard vertical spatial parking space is preset.

It is assumed that a trapezoid leg of a boundary of the trapezoid closer to a rear of the vehicle is a first side of the boundary of the trapezoid, when the boundary of the longitudinal-priority-instance trapezium does not satisfy the construction of the standard vertical spatial parking space, an angle between the first side of the boundary of the longitudinal-priority-instance trapezium and a bottom side of the boundary of the trapezoid closer to the vehicle is calculated, and a standard-size angled parking space is constructed based on this angle and the first side of the boundary of the trapezoid; if a space satisfies a construction of a standard angled spatial parking space, the standard angled spatial parking space is constructed; a size of the standard angled spatial parking space is preset.

If the standard vertical spatial parking space and the standard angled spatial parking space each are constructed unsuccessfully, a standard horizontal spatial parking space is constructed in the boundary of the lateral-priority-instance trapezium, the standard horizontal spatial parking space being parallel to a bottom side of the boundary of the lateral-priority-instance trapezium; if a space satisfies a construction of the standard horizontal spatial parking space, the standard horizontal spatial parking space is constructed. A size of the standard horizontal spatial parking space is preset.

If a condition for constructing the standard horizontal spatial parking space is still not met, then it is determined that there is currently no suitable parkable spatial parking space.

When there is a parkable spatial parking space, the system can perform automatic parking based on the parking space detection method, i.e., selecting the parking space, activating automatic parking, and ending after parking is completed.

The invention further provides a vision-based spatial parking space detection system, comprising a memory, a processor, and a program stored on the memory and executable on the processor. The processor, when executing the program, implements the above method. The memory is a storage space integrated in a controller or an external storage medium usable on the vehicle. The processor may be a data processing chip integrated or externally connected, usable on the vehicle, such as a vehicle controller. The program is a program code executable on the above processor.

The invention further provides a vehicle, comprising surround-view cameras, and the vision-based spatial parking space detection system described above.

The invention further provides a computer-readable storage medium, comprising a computer program stored thereon. The computer program, when executed by a processor, implements steps of the method.

The invention employs an instance segmentation algorithm, and thus can more directly find candidate regions for constructing spatial parking spaces and perform instance ranking, thereby reducing an impact of non-parking drivable areas on construction of spatial parking spaces. Then, three screenings are performed on the parkable space instances through image processing, to gradually narrow down a range. In the screening, through a weighted distance algorithm, a space instance least affected by obstacle occlusion at a position close to the cameras on sides of a body of the vehicle can be better found. A polygon space (trapezoid) boundary regression scheme with multi-dimensional (boundary of the longitudinal-priority-instance trapezium and boundary of the lateral-priority-instance trapezium) and variable weight ($\alpha$, $\beta$ being lateral correction parameters and longitudinal correction parameters respectively), supports construction of horizontal and vertical parking spaces while also supporting construction of spatial angled parking spaces.

Through setting of the preset position, merely by using coordinates and the weighted distance algorithm to calculate and select the instance region closest to the preset position, an impact of three-dimensional obstacles within the range of the surround-view image on instance segmentation of the parkable space region is reduced, and a calculation amount is small.

The method of the invention, by using a surround-view image instance segmentation algorithm and optimized selection of image frames, can quickly achieve detection of spatial parking space without using long-range ultrasonic radars, and can greatly avoid occlusion of parkable spaces in the surround-view image by three-dimensional obstacles in the surround-view image, thereby more accurately detecting parkable spaces, improving an accuracy of detection of spatial parking space. Moreover, by detecting spatial parking spaces visually, a problem that spatial angled parking spaces cannot be detected when traditionally detecting spatial parking spaces via ultrasonic radars can also be solved.

It should be noted that, according to needs of implementation, various steps/components described in the present application may be split into more steps/components, or two or more steps/components or partial operations of steps/components may be combined into new steps/components to achieve an objective of the invention.

It should be understood that, for those skilled in the art, improvements or variations may be made based on the above description, and all such improvements and variations should fall within the protection scope of the appended claims of the invention.

**Claims**

1. A vision-based spatial parking space detection method, applied to an electronic device of a vehicle, **characterized by**:

   receiving a surround-view image of a present vehicle, and performing a brightness preprocessing on the surround-view image;
   inputting the surround-view image brightness-preprocessed into a trained visual parking space instance segmentation model, to obtain first-stage parkable space instance regions in the surround-view image;
   for each first-stage parkable space instance region, respectively performing dilation followed by erosion operations, and then performing an area screening to remove instance regions whose pixel area is smaller than a theoretical minimum pixel area of parking space, and take remaining first-stage parkable space instance regions as second-stage parkable space instance regions;
   selecting an instance region closest to a preset position from the second-stage parkable space instance regions, as a third-stage parkable space instance;
   for the third-stage parkable space instance region, constructing a maximum instance boundary for a horizontal spatial parking space; and
   constructing a parkable spatial parking space based on the maximum instance boundary according to a required parking space size.

2. The vision-based spatial parking space detection method according to claim 1, wherein the visual parking space instance segmentation model is obtained by performing a model training using a surround-view parking space instance segmentation dataset by utilizing an instance segmentation algorithm; the surround-view parking space instance segmentation dataset is screened out and annotated from parking surround-view pictures.

3. The vision-based spatial parking space detection method according to claim 1, wherein the method is triggered upon receiving a signal to activate a parking space search function; if there is no parkable spatial parking space meeting requirements, a search continues until a parkable spatial parking space is obtained or a signal to deactivate the parking space search function is received.

4. The vision-based spatial parking space detection method according to claim 1, wherein the brightness preprocessing comprises:

> calculating an average brightness of the surround-view image;
> performing a brightness correction on the surround-view image according to the average brightness and a preset brightness range of normal-brightness picture, so that the average brightness of the surround-view image is in the brightness range of normal-brightness picture; and
> then performing a median filtering processing on the surround-view image.

5. The vision-based spatial parking space detection method according to claim 1, wherein the surround-view parking space instance segmentation dataset is specifically obtained by:

> collecting a large number of parking surround-view pictures, and screening the parking surround-view pictures to retain parking surround-view pictures in which there is at least one reasonable parkable space, thereby constituting the surround-view parking space instance segmentation dataset;
> performing a parking space instance annotation on pictures of the surround-view parking space instance segmentation dataset, a basic annotation criterion being to annotate only reasonable parkable space instance regions, and at least one side of the parkable space instance regions having an obstacle.

6. The vision-based spatial parking space detection method according to claim 1, wherein the instance region closest to the preset position is: an instance region closest to left and right surround-view cameras of the present vehicle and close to a middle portion of the surround-view image.

7. The vision-based spatial parking space detection method according to claim 6, wherein the third-stage parkable space instance region is obtained by:

> taking a center of a rear axle of the vehicle as a coordinate origin, a heading direction of the vehicle as a y direction, and a direction perpendicular to a right side of a body of the vehicle as an x direction, and calculating a center coordinate point of each second-stage parkable space instance region;
> dividing the second-stage parkable space instance regions into left and right sides of the body of the vehicle according to the center coordinate point, and respectively calculating an instance screening weighted distance $L_l$ and $L_r$ from second-stage parkable space instance regions on the left side and right side to surround-view cameras on the left side and right side:

$$L_l = \frac{1}{n}\sum_{i=1}^{n}[(x_i - x_l)^2 + a(y_i - y_l)^2]$$

$$L_r = \frac{1}{n}\sum_{i=1}^{n}[(x_i - x_r)^2 + a(y_i - y_r)^2]$$

> where, $x_l$, $y_l$ are x, y direction coordinates of a surround-view camera on the left side of the body of the vehicle; $x_r$, $y_r$ are x, y direction coordinates of a surround-view camera on the right side of the body of the vehicle; $x_i$, $y_i$ are x, y direction coordinates of each one pixel point of one second-stage parkable space instance region; n is a total number of pixel points of the one second-stage parkable space instance region; and $a$ is a preset value; respectively calculating minimum values of $L_l$ and $L_r$, to obtain the third-stage parkable space instance region.

8. The vision-based spatial parking space detection method according to claim 1, wherein the maximum instance boundary for the horizontal spatial parking space comprises a boundary of a longitudinal-priority-instance trapezium and a boundary of a lateral-priority-instance trapezium which are obtained in the following manner:

> assuming that a length of a bottom side of a trapezoid closer to the vehicle is $L_1$, a length of a corresponding side at another end of the trapezoid is $L_2$, these two sides being parallel to each other; and a height of the trapezoid is $H_{(L1,L2)}$, so that a construction formula for the boundary of the longitudinal-priority-instance trapezium is:

$$W_H = \frac{1}{2}(L_1 + L_2)H_{(L_1,L_2)} + \alpha H_{(L_1,L_2)}^2$$

where, $W_H$ is a corrected area of the boundary of the longitudinal-priority-instance trapezium; $\alpha$ is a longitudinal correction parameter;

a construction formula for the boundary of the lateral-priority-instance trapezium is:

$$W_L = \frac{1}{2}(L_1 + L_2)H_{(L_1,L_2)} + \beta(L_1 + L_2)^2$$

where, $W_L$ is a corrected area of the boundary of the lateral-priority-instance trapezium; $\beta$ is a lateral correction parameter;

respectively finding maximum values of $W_H$ and $W_L$, to obtain the boundary of the longitudinal-priority-instance trapezium and the boundary of the lateral-priority-instance trapezium.

9. The vision-based spatial parking space detection method according to claim 8, wherein based on the boundary of the longitudinal-priority-instance trapezium and the boundary of the lateral-priority-instance trapezium, a method for constructing the parkable spatial parking space is as follows:

first constructing a standard vertical spatial parking space in the boundary of the longitudinal-priority-instance trapezium; if the boundary of the longitudinal-priority-instance trapezium satisfies a construction of a standard vertical spatial parking space therein, constructing the standard vertical spatial parking space, a size of the standard vertical spatial parking space being preset;

assuming that a trapezoid leg of a boundary of the trapezoid closer to a rear of the vehicle is a first side of the boundary of the trapezoid, when the boundary of the longitudinal-priority-instance trapezium does not satisfy the construction of the standard vertical spatial parking space, calculating an angle between the first side of the boundary of the longitudinal-priority-instance trapezium and a bottom side of the boundary of the trapezoid closer to the vehicle, and constructing a standard-size angled parking space based on this angle and the first side of the boundary of the trapezoid; if a space satisfies a construction of a standard angled spatial parking space, constructing the standard angled spatial parking space, a size of the standard angled spatial parking space being preset;

if the standard vertical spatial parking space and the standard angled spatial parking space each are constructed unsuccessfully, constructing a standard horizontal spatial parking space in the boundary of the lateral-priority-instance trapezium, the standard horizontal spatial parking space being parallel to a bottom side of the boundary of the lateral-priority-instance trapezium; if a space satisfies a construction of the standard horizontal spatial parking space, constructing the standard horizontal spatial parking space. a size of the standard horizontal spatial parking space being preset;

if a condition for constructing the standard horizontal spatial parking space is still not met, determining that there is currently no suitable parkable spatial parking space.

10. A vision-based spatial parking space detection system, **characterized by** comprising a memory, a processor, and a program stored on the memory and executable on the processor, and wherein the processor, when executing the program, implements the method according to any one of claims 1 to 9.

11. A vehicle, **characterized by** comprising surround-view cameras, and the vision-based spatial parking space detection system according to claim 10.

12. A computer-readable storage medium, comprising a computer program stored thereon, **characterized in that** the computer program, when executed by a processor, implements steps of the method according to any one of claims 1 to 9.

FIG. 1

## INTERNATIONAL SEARCH REPORT

| International application No. |
|---|
| **PCT/CN2024/100900** |

| A. | CLASSIFICATION OF SUBJECT MATTER |
|---|---|

G06V20/58(2022.01)i

According to International Patent Classification (IPC) or to both national classification and IPC

| B. | FIELDS SEARCHED |
|---|---|

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, USTXT, EPTXT, WOTXT, CNTXT, CNKI: 车位, 泊车, 停车, 检查, 检测, 环视, 周视, 图像, 边界, park, space, detect, test, view, around, image, edge

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| PX | CN 117475400 A (DONGFENG MOTOR GROUP CO., LTD.) 30 January 2024 (2024-01-30) claims 1-10, and description, paragraph 7 | 1-12 |
| A | CN 109649384 A (HUAYU AUTOMOTIVE SYSTEMS CO., LTD.) 19 April 2019 (2019-04-19) claims 1-4 | 1-12 |
| A | CN 111369439 A (SOUTH CHINA UNIVERSITY OF TECHNOLOGY) 03 July 2020 (2020-07-03) entire document | 1-12 |
| A | US 2022219679 A1 (BEIJING BAIDU NETCOM SCIENCE TECHNOLOGY CO., LTD.) 14 July 2022 (2022-07-14) entire document | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 August 2024** | **06 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/100900**

| Patent document cited in search report | | | Publication date (day/month/year) | Patent family member(s) | | | Publication date (day/month/year) |
|---|---|---|---|---|---|---|---|
| CN | 117475400 | A | 30 January 2024 | None | | | |
| CN | 109649384 | A | 19 April 2019 | None | | | |
| CN | 111369439 | A | 03 July 2020 | None | | | |
| US | 2022219679 | A1 | 14 July 2022 | EP | 4024084 | A2 | 06 July 2022 |
| | | | | CN | 113640810 | A | 12 November 2021 |

Form PCT/ISA/210 (patent family annex) (July 2022)

**REFERENCES CITED IN THE DESCRIPTION**

**Patent documents cited in the description**

- CN 202311140496